# EUROPEAN PATENT APPLICATION

(11) **EP 3 892 807 A1**
(43) Date of publication of application: **13.10.2021**
(21) Application number: 20168318.2
(22) Date of filing: 06.04.2020
(51) Int. Cl.: E05F 15/54, F03G 7/00

(54) **DOOR ACTUATOR**

(71) Applicant: dormakaba Deutschland GmbH, 58256 Ennepetal (DE)
(72) Inventor: Leong, Man Yee, 680637 Singapore (SG)
(74) Representative: Balder IP Law, S.L.

(57) **Abstract**

The present invention relates to a door actuator (1) for opening and/or closing a door (101), wherein the door actuator (1) comprises a rotatable output shaft (2) for actuating the door (101), a cylinder (3) with a piston (4), wherein the cylinder (3) is at least partially filled with at least one fluid (5), and a power unit (6) which is arranged to apply a voltage to the fluid (5) in the cylinder (3) such that the fluid (5) is electrolyzed, wherein the piston (4) is arranged to seal the cylinder (3) and output a pressure generated by the electrolysis in the cylinder (3) to rotate the output shaft (2). The present invention also relates to a door unit (100) comprising the door (101) and the door actuator (1), wherein the rotatable output shaft (2) thereof is drivingly connected to the door (101) or to a rod assembly (102) connected to a door frame (103) such that a rotation of the output shaft (102) opens or closes the door (101).

## Description

The present invention relates to a door actuator for opening and/or closing a door and a door unit comprising the door actuator.

Conventionally, from for example DE 10 2012 111 539 A1, door actuators are known which are driven by a spring loaded mechanism. In addition, door closers with electromagnetic devices are known. However, in spring loaded mechanisms, the spring force must be overcome when opening the door, which can be cumbersome. In addition, the known electromagnetic devices commonly require a constant power source in order to be secure. These can de-energize in the case of a power outage, which can disable security measures.

An object of the present invention is to provide a door actuator for opening and/or closing a door which allows for easy opening and/or closing of the door and which can suitably actuate the door, even in the case of a power outage.

This object is solved by the features of the independent claims. The dependent claims contain advantageous embodiments of the present invention.

A door actuator for opening and/or closing a door of the present invention comprises a rotatable output shaft for actuating the door, a cylinder with a piston, wherein the cylinder is at least partially filled with at least one fluid, and a power unit, which is arranged to apply a voltage to the fluid in the cylinder such that the fluid is electrolyzed, and wherein the piston is arranged to seal the cylinder and output a pressure generated by the electrolysis in the cylinder to rotate the output shaft. Therefore, the power unit may apply the voltage to the fluid in order to generate a pressure in the cylinder. The fluid may preferably be one which, during electrolysis, produces gases.

The door actuator of the present invention has the advantage that no spring force must be overcome when opening the door. In addition, a pressure necessary for closing the door can be generated in the door actuator of the present invention, which may still be applied for opening and/or closing the door, even if a power outage occurs after generating said pressure.

Preferably, at least one fluid in the cylinder is water and the aforementioned electrolysis reaction is water-splitting. This has the advantage that a clean and easily reversible electrochemical reaction is used for generating the pressure in the cylinder. Therein, hydrogen and/or oxygen are generated by applying a voltage to the water. Due to the lower density of gases compared to the liquid in the cylinder, the oxygen and hydrogen generated in the cylinder apply a pressure to the piston, which may then be output to rotate the output shaft.

Advantageously, at least one fluid in the cylinder may be an electrolyte solution, preferably an acidic or basic water solution. By including an electrolyte solution in the cylinder, the electrolysis reaction in the cylinder can be carried out more efficiently and/or quickly.

Preferably, the power unit may be arranged to apply a voltage to the cylinder, preferably directly to the cylinder, such that the electrolysis reaction occurs at a fluid-side inner surface of the cylinder. This has the technical advantage that an easy and cost-effective configuration of the door actuator can be achieved.

Further preferably, the power unit may be arranged to apply the voltage to the piston, preferably to a piston rod connected to the piston, such that the electrolysis reaction occurs at a fluid-side top surface of the piston. Therefore, an easy and cost-effective configuration of the door actuator may be achieved. Preferably, the power unit may apply the voltage between the cylinder and the piston, such that a half reaction of the electrolysis reaction occurs at the fluid-side top surface of the piston and the other half reaction of the electrolysis reaction occurs at the fluid-side inner surface of the cylinder.

Further advantageously, the door actuator may alternatively or additionally comprise at least one electrode disposed in the cylinder, wherein the power unit applies the voltage to the at least one electrode. Preferably, the power unit may apply the voltage to the at least one electrode, the cylinder, and/or the piston. With this, for instance, different materials may be used for the electrodes in comparison to the cylinder and/or piston, with which the electrolysis reaction can be made more efficient and the door actuator more cost-effective.

Further preferably, a first electrode of the at least one electrode may be arranged on a fluid-side inner surface of the cylinder. Therein, a first electrode may be preferably arranged to line at least a portion of the inner surface of the cylinder. That is, the first electrode may be attached to the inner surface of the cylinder and/or formed to line at least a portion of said inner surface. More preferably, the first electrode may be made of a coating disposed on the inner surface of the cylinder. This has the advantage that the electrolysis reaction may be carried out efficiently and quickly inside the cylinder.

Further preferably, a second electrode may be arranged on the fluid-side inner surface of the cylinder. Preferably, the second electrode may be electrically insulated from the first electrode in the fluid-side inner surface of the cylinder. Herein and in the following, "electrically insulated" means that there is no direct electrical contact between the respective elements, in this case the first and second electrodes. However, a current may still flow between said elements via the fluids in the cylinder through the electrolysis reaction therein. This has the technical advantage that the distance between the areas at which each half reaction takes place during the electrolysis reaction may be reduced. Thus, the electrolysis in the cylinder may be carried out more efficiently.

Further preferably, a second electrode may be arranged on the fluid-side top surface of the piston. Herein and in the following, first and second electrodes denote electrodes at each of which a half reaction of the electrolysis is carried out. Therefore, the second electrode arranged on a top surface of the piston may be provided in addition or alternatively to the second electrode arranged on the fluid-side inner surface of the cylinder. This has the technical advantage that the configuration of the door actuator can be made simpler and more cost-effective, since at least one of the second electrodes may be arranged on a top surface of the piston and, for instance, be connected to the power unit via the piston.

In an advantageous configuration, the piston may include at least one piston ring for sealing the cylinder and/or electrically insulating a contact surface between the piston and the inner surface of the cylinder. This has the technical advantage that the cylinder may be sealed, preferably air-tight, the movement of the piston may be made more advantageously frictionless, and the piston ring may prevent a direct electrical contact between the piston and, for instance, the first, second electrodes and/or the inner surface of the cylinder.

Further advantageously, the piston, the piston ring, the first and second electrodes, and/or at least a portion of the cylinder, especially an inner lining of the cylinder, may be made of stainless steel, cast iron, nickel, copper, lead, titanium, PTFE, PCTFE, PVDF, and/or CPVC. Further preferably, the piston, the piston ring, the first and second electrodes, and/or at least a portion of the cylinder may be made of acid- and/or base-resistant materials. This has the technical advantage that the aforementioned elements may preferably be corrosion-resistant, thereby increasing the longevity of the door actuator.

Further preferably, the door actuator may comprise a motion conversion element for converting linear and rotary motions between the piston and the output shaft. For instance, the piston may preferably exert a linear force or pressure, which is converted into a rotary force or pressure by the motion conversion element. This has the technical advantage that the door actuator may be employed in a large variety of configurations for opening and/or closing doors. In addition, the motion conversion element may be configured such that a total size of the door actuator may be reduced, thereby saving costs and space.

In an advantageous embodiment, the door actuator may further comprise a valve for regulating a pressure in the cylinder. This has the advantage that the pressure in the cylinder may be suitably regulated, preferably such that the door may be safely opened and closed by the door actuator. Further preferably, the door actuator and/or the valve may be configured to include a pressure sensor.

Further advantageously, the door actuator may comprise a controller that is in communication with the power unit, and especially the valve, and is arranged to control a voltage and/or current for the electrolysis. The control of the power unit and/or the valve may preferably be based on an opening and/or closing condition of the door and/or be based on an output of the pressure sensor and/or a hazard alarm, such as for example a fire alarm, to the controller. Therefore, the controller may be configured to control the pressure and/or the generation thereof depending on the current opening and/or closing condition of the door and/or dependent on a possible emergency situation, such as a fire in a building and/or a power outage.

The present invention also relates to a door unit, wherein the door unit comprises a door and the door actuator according to any of the foregoing advantageous embodiments. Therein, the rotatable output shaft is drivingly connected to the door or to a rod assembly connected to a door frame or the door such that a rotation of the output shaft opens or closes the door.

Further details, advantages, and features of preferred embodiments of the present invention are described in detail with reference to the figures. Therein,
Fig. 1 shows a schematic cross section of a door actuator according to a first embodiment of the present invention,
Fig. 2 shows a schematic cross section of a door actuator according to a second embodiment of the present invention, and
Fig. 3 shows a schematic drawing of a door unit of the present invention.

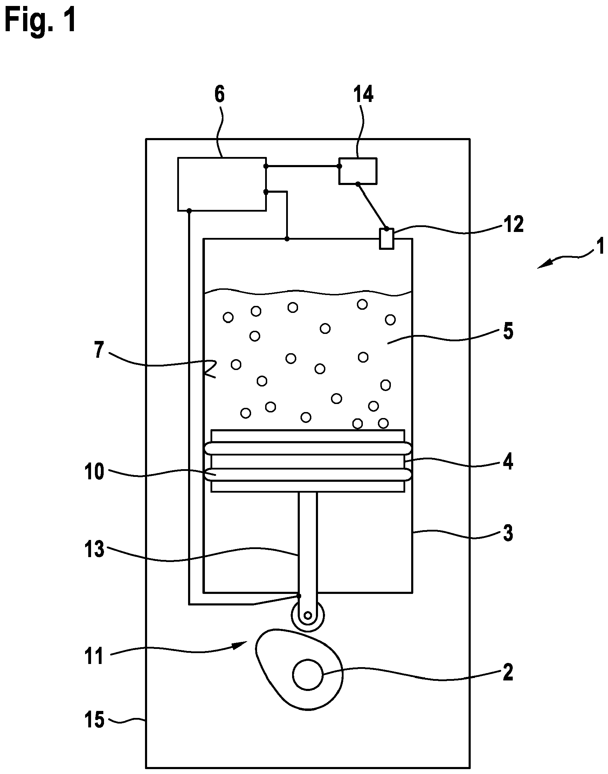

Fig. 1 shows a schematic cross section of a door actuator 1 according to a first embodiment of the present invention.

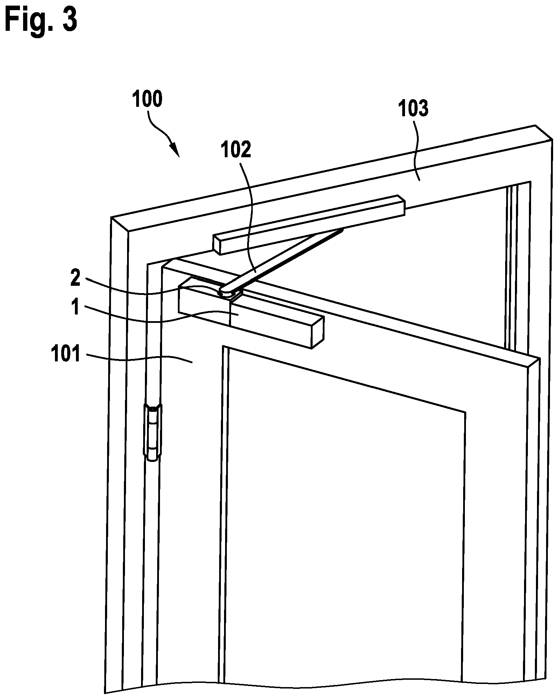

The door actuator 1 for opening and/or closing a door 101 (compare Fig. 3) comprises a cylinder 3 with a piston 4, wherein the cylinder 3 is at least partially filled with a fluid 5, preferably water. Further, the piston 4 seals the cylinder 3 air-tight. The door actuator 1 also includes a power unit 6, which is electrically connected to the cylinder 3 and the piston 4 via a piston rod 13, which is connected to the piston 4 and an output shaft 2 of the door actuator.

When the power unit 6 applies a voltage between the cylinder 3 and the piston 4, the fluid 5 is electrolyzed. In this case, gaseous hydrogen and oxygen are generated via water-splitting. Since the gases, namely hydrogen and oxygen, have a lower density than the fluid 5, a pressure is exerted by the fluid 5 and the gases onto the piston 4.

The door actuator 1 further includes a motion conversion element 11, which converts the linear force exerted by the gases onto the piston 4 and transferred via the piston rod 13, to a rotary motion of the rotatable output shaft 2. Therefore, when the fluid 5 in the cylinder 3 is electrolyzed, a force or torque is exerted onto the rotatable output shaft 2.

In the present embodiment, the motion conversion element 11 is a cam disc and cam follower mechanism, wherein the piston rod 13 is configured to be a cam follower and the motion conversion element 11 is cam-disc-shaped. In this case, the rotatable output shaft 2 is coupled to a door 101. Therefore, since the motion conversion element 11 is configured to be a cam-disc-shape, the amount of resulting rotation force exerted by the piston 4 can depend on an opening and/or closing condition of the door 101. For instance, the cam-disc-shape of the motion conversion element 11 can be configured to apply a torque minimum to the rotatable output shaft 2 when the door 101 is fully open and/or closed.

The motion conversion element 11 may also be a slider-crank mechanism and/or rack-and-pinion mechanism.

Further, the piston 4 of the door actuator 1 includes two piston rings 10. Herein, the piston rings contact an inner fluid-side surface 7 of the cylinder 3. The piston rings 10 of the present embodiment are configured to reduce a friction between the piston 4 and the inner surface of the cylinder 7. Further, the piston rings 10 are configured to electrically insulate the piston 4 from the inner surface 7 of the cylinder 3. This means that no direct electrical contact is provided between the piston 4 and the inner surface 7 of the cylinder 3, thereby preventing a short-circuit between these elements. On the other hand, an electric current flows between the cylinder 3 and the piston 4 via the electrolysis reaction in the fluid 5. Therefore, the electric current supplied by the power unit 6 must flow through the fluid 5 between the cylinder 3 and the piston 4, thereby allowing the fluid 5 to be electrolyzed and in this case, hydrogen and oxygen generated.

The door actuator 1 further includes a valve 12 for controlling and/or regulating the pressure in the cylinder 3. Further, the door actuator 1 also includes a controller 14, which is connected to the power unit 6 and the valve 12. The door actuator 1 may also include a pressure sensor in the valve 12, the power unit 6, and/or connected to the piston 4 and/or the output shaft 2. In this case, the controller 14 may also be connected to said pressure sensor. By controlling the voltage applied by the power unit 6 and/or an opening and closing of the valve 12, the controller 14 can regulate a pressure generated in the cylinder 3. Further, the controller 14 may be in communication with an alarm unit, which may output an alarm in an emergency situation such as a fire. Therefore, the controller 14 can regulate pressure in the cylinder 3 and thereby an opening and/or closing of the door 101 in reaction to a hazard situation.

The door actuator 1 of the present embodiment preferably includes a housing 15 in which the power unit 6, the controller 14, the valve 12, the cylinder 3, the piston 4, the piston rod 13, the motion conversion element 11, and at least a portion of the rotatable output shaft 2 are housed.

Preferably, the cylinder 3, the piston 4, piston ring 10, and/or the piston rod 13 may be made of an acid- and/or base-resistant material, such as stainless steel, cast iron, nickel, copper, lead, titanium, PTFE, PVDF, and/or CPVC. Further, the cylinder 3 may also include an inner and/or outer lining, which covers the inner surface 7 thereof at least partially, wherein said inner and/or outer lining may be made of one of the aforementioned materials. Further, the aforementioned elements may also comprise carbon-based materials, such as graphene.

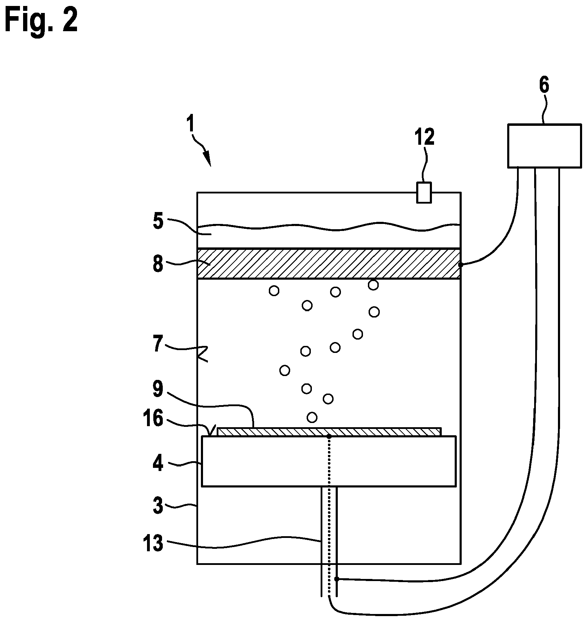

Fig. 2 shows a schematic cross section of a door actuator 1 according to a second embodiment of the present invention. Therein, the housing 15, the rotatable output shaft 2, the motion conversion element 11, the piston rings 10, and the controller 14 are the same as those of the first embodiment and are omitted in Fig. 2.

The door actuator 1 of the second embodiment comprises a first electrode 8. Herein, the first electrode 8 is disposed on and lines a portion of the inner surface 7 of the cylinder 3. The first electrode 8 is not limited to being disposed on a portion of the inner surface 7 of the cylinder 3, but can also be disposed on the entire inner surface 7 of the cylinder 3.

Further, the power unit 6 is connected to the first electrode 8. In order to secure the electrical connection between the power unit 6 and the first electrode 8, the cylinder 3 may include a via, through which a cable or wire may protrude. However, the power unit 6 may also be electrically connected directly to the cylinder 3, wherein at least the portion surrounding the first electrode 8 is conductive, in order to secure the electrical connection between the first electrode 8 and the power unit 6 via the cylinder 3.

Alternatively, the cylinder 3 may be comprised of multiple cross sections, especially rings, which are connected to each other, especially screwed together, wherein at least one of said cross sections may be the first electrode 8. In this case, the power unit 6 may be electrically connected to an outer circumference of the first electrode 8.

In addition, the door actuator 1 of the second embodiment includes a second electrode 9 disposed on the piston 4, especially on a fluid-side top surface 16 of the piston 4. The power unit 6 may be connected directly to the second electrode 9 through a wire in the piston 4 and the piston rod 13 (see dotted line in Fig.2) and/or may be connected directly to the piston rod 13.

In this case, when the voltage is applied across the first electrode 8 and the second electrode 9, the fluid 5 is electrolyzed therebetween, thus generating hydrogen and oxygen.

In addition, the first electrode 8 and the second electrode 9 of the second embodiment may also be included in the configuration of the door actuator 1 of the first embodiment. Thus, a plurality of reaction sites for the electrolysis may be provided in the door actuator 1 of the present invention. Further, the door actuator 1 may also include a plurality of each of first electrodes 8 and/or second electrodes 9.

Fig. 3 shows a schematic drawing of a door unit 100 of the present invention. The door unit 100 comprises a door 101 and the door actuator 1 of the first or second embodiment of the present invention.

Therein, the rotatable output shaft 2 of the door actuator 1 is drivingly connected to a rod assembly 102, which is connected to a door frame 103. The rod assembly 102 may especially be a slide rail, wherein an end of the rod assembly 102, which is connected to the door frame 103, may slide back-and-forth in a rail when the door is opened and/or closed.

When a voltage and current are applied by the power unit 6 across the fluid 5 and the electrolysis reaction is carried out, the piston 4 exerts, via the motion conversion element 11, a rotational force to the output shaft 2. This rotational force of the output shaft 2 is then transferred via the rod assembly 102 to the door frame 103, wherein the door actuator 1 is connected to the door 101. Therefore, the door unit 100 can close or open the door 101 via the door actuator 1.

### List of Reference Numerals

- 1: door actuator
- 2: output shaft
- 3: cylinder
- 4: piston
- 5: fluid
- 6: power unit
- 7: fluid-side inner surface of the cylinder
- 8: first electrode
- 9: second electrode
- 10: piston ring
- 11: motion conversion element
- 12: valve
- 13: piston rod
- 14: controller
- 15: housing
- 16: fluid-side top surface of the piston
- 100: door unit
- 101: door
- 102: rod assembly
- 103: doorframe

## Claims

1. A door actuator (1) for opening and/or closing a door (101), comprising:
• a rotatable output shaft (2) for actuating the door (101);
• a cylinder (3) with a piston (4), wherein the cylinder (3) is at least partially filled with at least one fluid (5), and
• a power unit (6) arranged to apply a voltage to the fluid (5) in the cylinder (3) such that the fluid (5) is electrolyzed, wherein
• the piston (4) is arranged to seal the cylinder (3) and output a pressure generated by the electrolysis in the cylinder (3) to rotate the output shaft (2).

2. The door actuator (1) according to claim 1, wherein at least one fluid (5) in the cylinder (3) is water and the electrolysis reaction is water-splitting.

3. The door actuator (1) according to claims 1 or 2, wherein at least one fluid (5) in the cylinder (3) is an electrolyte solution, preferably an acidic or basic water solution.

4. The door actuator (1) according to any one of claims 1 to 3, wherein the power unit (6) is arranged to apply a voltage to the cylinder (3), such that the electrolysis reaction occurs at a fluid-side inner surface (7) of the cylinder (3).

5. The door actuator (1) according to any one of claims 1 to 4, wherein the power unit (6) applies the voltage to the piston (4), especially to a piston rod (13) connected to the piston (4), such that the electrolysis reaction occurs at a fluid-side top surface (16) of the piston (4).

6. The door actuator (1) according to any one of claims 1 to 5, further comprising at least one electrode (8, 9) disposed in the cylinder (3), wherein the power unit (6) applies the voltage to the at least one electrode (8, 9).

7. The door actuator (1) according to claim 6, wherein a first electrode (8) is arranged on a fluid-side inner surface (7) of the cylinder (3), especially arranged to line at least a portion of the inner surface (7) of the cylinder (3).

8. The door actuator (1) according to claim 6 or 7, wherein a second electrode (9) is arranged on the fluid-side inner surface (7) of the cylinder (3), especially electrically insulated from the first electrode (8).

9. The door actuator (1) according to any one of claims 6 to 8, wherein a second electrode (9) is arranged on the fluid-side top surface (16) of the piston (4).

10. The door actuator (1) according to any one of claims 1 to 9, wherein the piston (4) includes at least one piston ring (10) for sealing the cylinder (3) and/or electrically insulating a contact surface between the piston (4) and the inner surface (7) of the cylinder (3).

11. The door actuator (1) according to any one of claims 1 to 10, wherein the piston (4), the piston ring (10) and/or at least a portion of the cylinder (3), especially an inner lining of the cylinder (3), are made of stainless steel, cast iron, nickel, copper, lead, titanium, PTFE, PCTFE, PVDF, and/or CPVC.

12. The door actuator (1) according to any one of claims 1 to 11, further comprising a motion conversion element (11) for converting linear and rotary motions between the piston (4) and the output shaft (2).

13. The door actuator (1) according to any one of claims 1 to 12, further comprising a valve (12) for regulating a pressure in the cylinder (3).

14. The door actuator (1) according to any one of claims 1 to 13, further comprising a controller (14) in communication with the power unit (6), and especially the valve (12), arranged to control a voltage and/or current for the electrolysis, especially based on an opening and/or closing condition of the door and/or based on an output of a fire alarm to the controller.

15. A door unit (100), comprising:
• a door (101); and
• the door actuator (1) according to any one of claims 1 to 14, wherein the rotatable output shaft (2) is drivingly connected to the door (101) or to a rod assembly (102) connected to a door frame (103) such that a rotation of the output shaft (2) opens or closes the door (101).
